# EUROPÄISCHE PATENTANMELDUNG

(11) **EP 1 028 090 A1**
(43) Veröffentlichungstag der Anmeldung: **16.08.2000**
(21) Anmeldenummer: 00101729.2
(22) Anmeldetag: 28.01.2000
(51) Int. Cl.: C02F 1/00

(54) **Wasserfiltervorrichtung mit Kochkanne**

(30) Priorität: 11.02.1999 DE 19905600
(71) Anmelder: Brita GmbH, 65232 Taunusstein (DE)
(72) Erfinder: Weyrauch, Detlev Dr., 56271 Kleinmaischeid (DE); Henke, Holger, 65824 Schwalbach (DE)
(74) Vertreter: Weber, Dieter, Dr.

(57) **Zusammenfassung**

Beschrieben wird eine Wasserfiltervorrichtung mit einem Filtratbehälter (1) mit seitlich angebrachtem Griff (2), mit einem Rohwasserbehälter (3) und mit einem Reinigungsmittel aufweisenden Filter (5), der mit dem Filtratbehälter (1) und dem Rohwasserbehälter (3) in Fließverbindung steht, wobei Heizeinrichtungen (Kannensockel 11) für die Erwärmung und eine Pumpe für die Fließbewegung des filtrierten Wassers vorgesehen sind.

Um trotz besserer Reinigung des Wassers eine hohe Zapfgeschwindigkeit zu ermöglichen und die Vorrichtung bequemer handhaben zu können, ist erfindungsgemäß vorgesehen, daß der Filter (5) als Filterkartusche (5) ausgestaltet ist, deren Zulauföffnung im Bodenbereich des Rohwasserbehälters (3) angeordnet ist und die so nach unten in den Filtratbehälter (1) ragt, daß das Rohwasser durch Schwerkraft bis mindestens unter die Filterkartusche (5) gelangen kann, daß die Pumpe über eine Zuleitung mit dem Filtratbehälter (1) und über eine Ableitung mit der Auslaßöffnung eines Zapfhahnes (29) verbindbar ist und daß eine Kochkanne (9) unter dem Zapfhahn (29) anbringbar vorgesehen ist und die Heizeinrichtungen (Kannensockel 11) aufweisen.

## Beschreibung

Die Erfindung betrifft eine Wasserfiltervorrichtung mit einem Filtratbehälter mit seitlich angebrachtem Griff, mit einem Rohwasserbehälter und mit einem Reinigungsmittel aufweisenden Filter, der mit dem Filtratebhälter und dem Rohwasserbehälter in Fließverbindung steht, wobei Heizeinrichtungen für die Erwärmung und eine Pumpe für die Fließbewegung des filtrierten Wassers vorgesehen sind.

Es gibt bereits Wasserfiltervorrichtungen, die ohne eine Pumpe arbeiten und bei denen im Boden eines Rohwasserbehälters ein Filter in Gestalt einer Filterkartusche eingesetzt ist, durch welche zu reinigendes Wasser in einen Filtratbehälter läuft und in diesem durch Heizeinrichtungen erwärmt wird.

Bekannt ist aber auch bereits eine Wasserfiltervorrichtung mit den eingangs erwähnten Merkmalen, bei der aus einem doppelwandigen, ringförmigen, den eigentlichen Filtratbehälter wie eine Wandung umgebenden Rohwasserbehälter das Rohwasser über eine Pumpe durch den Filter gedrückt wird, der in dem seitlich am Rohwasserbehälter angebrachten Griff angeordnet ist und diesen ganz mit granulatförmigem Reinigungsmittel füllt. Das Rohwasser wird unten am Griff eingedrückt und verläßt den Filter oben oberhalb des Rohwasserbehälters derart, daß das gereinigte bzw. gefilterte Wasser in den konzentrisch innerhalb des Rohwasserbehälters angeordneten Filtratbehälter von oben nach unten einlaufen kann. Im unteren Bereich befinden sich Heizeinrichtungen, so daß die gesamte Vorrichtung auch die Funktion eines Wasserkochers hat.

Diese bekannte Wasserfiltervorrichtung hat aber einen komplexen Aufbau und hat eine einzige große Kanne mit klobigem Griff. Die Reinigung dieser Vorrichtung ist schwierig und das Entkalken der Kochkanne praktisch unmöglich.

Der Erfindung liegt daher die Aufgabe zugrunde, die Wasserfiltervorrichtung der eingangs genannten Art so weiter zu bilden, daß trotz besserer Reinigung des Wassers eine hohe Zapfgeschwindigkeit ermöglicht wird und die Vorrichtung bequemer gehandhabt werden kann. Dabei versteht man unter der Reinigung des Wassers die Filtrierung bzw. die Aufbereitung des Wassers durch das Reinigungsmittel in dem Filter.

Die Aufgabe wird erfindungsgemäß dadurch gelöst, daß der Filter als Filterkartusche ausgestaltet ist, deren mindestens eine Zulauföffnung im Bodenbereich des Rohwasserbehälters angeordnet ist und die so nach unten in den Filtratbehälter ragt, daß das Rohwasser durch Schwerkraft bis mindestens unter die Filterkartusche gelangen kann, daß die Pumpe über eine Zuleitung mit dem Filtratbehälter und über eine Ableitung mit der Auslaßöffnung eines Zapfhahnes verbindbar ist und daß eine Kochkanne unter dem Zapfhahn anbringbar vorgesehen ist und die Heizeinrichtungen aufweist.

Zwar sind Filterkartuschen verschiedener Ausgestaltungen und insbesondere die im Haushalt in großen Stückzahlen eingesetzten und im Handel erhältlichen Filterkartuschen an sich bekannt, bei dem bekannten Wasserkocher mit vorgeschaltetem Filter muß das Reinigungsmittel aber in besonderen Behältern, hier im Griff, untergebracht werden. Die Verwendung der Filterkartuschen in Haushaltsformat ist dort nicht möglich. Deshalb ist es für die Lösung gemäß der Erfindung vorteilhaft und für den Benutzer der neuen Wasserfiltervorrichtung ein großer Anreiz, Wasser nicht nur reinigen, d.h. filtern zu können, sondern hierfür auch die sogenannten Filterkartuschen einsetzen zu können. Mit weiterem Vorteil ist der Rohwasserbehälter so ausgestaltet, daß in seinem Bodenbereich der Zulauf der Filterkartusche angeordnet wird, wie das bei verschiedenen Wasserreinigungsvorrichtungen an sich ebenfalls schon verwendet wird. Das Zurückgreifen der neuen Wasserfiltervorrichtung auf bewährte Merkmale und Benutzungen stellt einen weiteren Vorteil dar. Der Rohwasserbehälter kann mit anderen Worten wie ein Trichter aufgebaut sein, an dessen Boden die Filterkartusche einsetzbar ist. Weiterhin ist es günstig, daß auch bei der erfindungsgemäßen Filtervorrichtung die Filterkartusche nach unten in den Filtratbehälter ragt, so daß das Rohwasser durch die Schwerkraft durch die Filterkartusche hindurchlaufen und an deren unterem Ende unten austreten kann. Man hat auf diese Weise bei der erfindungsgemäßen Lösung das Prinzip bewährter Wasserreinigungsvorrichtungen verwendet und ist dennoch in der Lage, weiterhin angestrebte Effekte und Ergebnisse zu erhalten, nämlich ein schnelles Zapfen und ein praktisches Erwärmen des filtrierten Wassers.

Wenn nach der Lehre der Erfindung aus dem Filtratbehälter das gereinigte bzw. aufbereitete oder filtrierte Wasser über die Zuleitung mittels der Pumpe weiter in eine Ableitung gefördert werden kann, ist es möglich, das gereinigte Wasser aus der Auslaßöffnung der Ableitung unter Druck einem Zapfhahn zur Verfügung zu stellen. Öffnet man den Zapfhahn, dann gelangt das gereinigte Wasser mit erhöhter Fließgeschwindigkeit aus dem Zapfhahn in die darunter angeordnete Kochkanne. Sofern nur genügend Filtratwasser bzw. filtriertes Wasser vorhanden ist, kann die Kochkanne durch die hohe Zapfgeschwindigkeit in kürzester Zeit gefüllt werden.

Unter Kochkanne versteht man eine abnehmbare Kanne mit Griff oder alternativ einen stationären Tank bzw. Isolierbehälter mit Heizeinrichtungen zur Bevorratung von filtriertem Wasser. In diesem Falle würde man das Wasser über eine zusätzliche Entnahmevorrichtung abzapfen.

Dieses schnelle Zapfen und Füllen der Kochkanne gelingt durch die hohe Zapfgeschwindigkeit, obwohl das Filtern aus dem Rohwasserbehälter langsam und nur durch Schwerkraft erfolgt. Das Reinigungsmittel in der Filterkartusche kann also optimal ausgenutzt werden, und dennoch kann die Kochkanne über den Faktor Zeit mit hoher Fließgeschwindigkeit gefüllt werden. Man braucht nämlich nur das langsame Füllen des Filtratbehälters abzuwarten. Das Filtrieren bzw. Reinigen des Wassers erfolgt mit anderen Worten zeitlich unabhängig von Zapfen und Herausführen aus dem Filtratbehälter mittels der Pumpe in andere Gefäße, zum Beispiel die erwähnte Kochkanne.

Die Kochkanne ist zwar unter dem Zapfhahn anbringbar, es braucht aber nur die Bedingung erfüllt zu werden, daß das Hauptvolumen der Kochkanne auf einer geringeren Höhe als die Auslaßöffnung des Zapfhahnes angeordnet ist. Dann nämlich kann man auf Dichtungen zwischen Zapfhahn und Kochkanne verzichten und das gereinigte Wasser auch seitlich in die Kochkanne einfüllen. Im Bodenbereich der Kochkanne befinden sich wie bei den bekannten Wasserkochern die Heizeinrichtungen. Diese können einen negativen Einfluß auf das Reinigungsmittel in der Filterkartusche nicht ausüben, denn die Filterkartusche ist von dem Wirkungsbereich der Heizeinrichtung physikalisch getrennt und damit thermisch optimal isoliert.

Durch die bessere Ausnutzung des Reinigungsmittels in der Filterkartusche kann das Wasser besser gereinigt werden, die Abnahme des Filtrates bzw. des gereinigten Wassers erfolgt durch die zwischengeschaltete Pumpe in kurzer Zeit, was eine hohe Zapfgeschwindigkeit bedeutet. Durch den Aufbau der neuen Wasserfiltervorrichtung gemäß der Erfindung ist eine bequemere Handhabung möglich, und es ergeben sich auch bessere Reinigungsmöglichkeiten der einzelnen Elemente der Vorrichtung, zum Beispiel das Entkalken der Kochkanne. Die Filtration der neuen Vorrichtung ist durchgreifend, weil man sich für das Filtrieren Zeit läßt, weil man zum Beispiel 5 - 10 Minuten verstreichen läßt, bis 1 Liter Wasser durch die Schwerkraft durch die Filterpatrone hindurchgelaufen ist. Gleichwohl kann eine Zapfgeschwindigkeit mit 30 Sekunden für 1 Liter ermöglicht werden. Der Vorgang der Filtration ist von dem Vorgang des Abzapfens abgekoppelt und unabhängig von diesem. Dadurch ist es auch möglich, je nach Bedarf kleinere Mengen Filtrat abzuzapfen und für die weitere Verarbeitung oder den Verzehr zu verwenden.

Weiterhin ist es gemäß der Erfindung von Vorteil, wenn die Behälter, die Pumpe und die Kochkanne von einem gemeinsamen Stützboden gehalten sind. Die erwähnten Elemente der Vorrichtung können auf diese Weise zusammengefaßt und kompakt nebeneinander angeordnet sein. Der Benutzer kann sie dann als eine Einheit handhaben und zum Beispiel platzsparender an der für die Wasserfiltervorrichtung gemäß der Erfindung vorgesehenen Stelle anordnen. Man kann die Energieversorgung für die Pumpe und gegebenenfalls auch andere Elemente der neuen Vorrichtung in dem gemeinsamen Stützboden integrieren und zusammenfassen. Unter den Behältern, die gemeinsam mit der Pumpe und der Kochkanne von dem Stützboden gehalten werden, versteht man zum Beispiel den Rohwasserbehälter, die Filterkartusche und den Filtratbehälter.

Bei weiterer vorteilhafter Ausgestaltung der Erfindung ist/sind der Rohwasserbehälter und/oder der Filtratbehälter abnehmbar vorgesehen. Auf diese Weise kann man den einzelnen Elementen und auch den einzelnen Behältern ein kleineres Gewicht geben. Es ist nicht nur der Zusammenbau auf dem gemeinsamen Stützboden günstig mit der Folge einer kompakten Wasserfiltervorrichtung, sondern die Handhabung ist dadurch noch erheblich erleichtert, weil man ein oder zwei Behälter für sich von dem Stützboden abnehmen kann. Beispielsweise kann der Rohwasserbehälter wie bei bekannten Wasserreinigungsvorrichtung in einer Auffangkanne sitzen, deren unterer Bereich als Filtratbehälter ausgestaltet ist. Ein Ergreifen des Filtratbehälters und Herausnehmen von dem Stützboden würde dann auch ein Entfernen des Rohwasserbehälters und der daran angeordneten Filterkartusche bedeuten. Die Abnehmbarkeit des Rohwasserbehälters und/oder des Filtratbehälters bringt ferner den Vorteil mit sich, daß an der Wasserleitung der Rohwasserbehälter direkt befüllt werden kann. Dadurch kann sichergestellt werden, daß die Kochkanne über die integrierte Pumpe ausschließlich mit gefiltertem Wasser befüllt wird. Dadurch können die unschönen Kalkablagerungen in handelsüblichen Wasserkannen vermieden werden. Eine solche Wasserfiltervorrichtung genügt nicht nur hohen Hygieneanforderungen, sondern man kann eine solche Vorrichtung auch für bakterielle Schutzbedingungen vorbereiten.

Günstig ist es gemäß der Erfindung auch, wenn die Kochkanne abnehmbar ausgestaltet ist. Eine solche Kochkanne kann einen bequem zu handhabenden Aufbau mit geringem Gewicht und praktischer Form haben. Die Kochkanne weist ähnlich wie bekannte Wasserkocher im Bodenbereich Heizeinrichtungen auf, ist oben von einem Deckel verschließbar und hat im Griff sichtbar einen Kochschalter. Durch die Trennung von Kochkanne und Filtratbehälter und sicher auch von dem Rohwasserbehälter ist eine hygienisch saubere Trennung möglich.

Weiterhin ist es vorteilhaft, wenn erfindungsgemäß an der Pumpe eine Einrichtung zur Anzeige der Erschöpfung des Reinigungsmittels in der Filterkartusche vorgesehen ist. Vorzugsweise ist die Pumpe in einem Gehäuse untergebracht, an dessen Oberseite eine Erschöpfungsanzeige angebracht ist. Der Benutzer blickt im allgemeinen von oben auf die Wasserfiltervorrichtung und hat daher die Erschöpfungsanzeige sogleich im Blick. Es kann dadurch die Erschöpfung der Funktion des Reinigungsmittels bezüglich Zeitablauf oder verarbeitetem Volumen von gereinigtem Wasser oder von beidem angezeigt werden. Der Einsatz einer Pumpe bei einer solchen Vorrichtung wie hier bei der Erfindung gestattet recht genaue Messungen, weil das Förderverhalten der Pumpe und damit der produzierte Volumenstrom über die Zeit eine gute Erschöpfungsanzeige gibt. Wenn es sich bei dem Anzeigegerät um ein elektronisches Gerät handelt, kann jegliche Energieversorgung zugleich über den Elektroanschluß des Pumpenantriebes erfolgen.

Man kann erfindungsgemäß ferner den Zapfhahn auch gegenüber dem Stützboden bewegbar vorsehen. Die an die Pumpe angeschlossene Ableitung führt zu einem beweglichen Zapfhahn, so daß die Auslaßöffnung des Zapfhahnes nicht nur über dem Einlaß einer Kochkanne, sondern auch über andere zu füllende Behälter in Position gebracht werden kann. Es handelt sich dann um eine allgemeine Zapfstelle für gereinigtes Wasser, wobei in kurzer Zeit unterschiedliche Mengen in beliebige Behälter abgezapft werden können.

Zweckmäßig ist es erfindungsgemäß, wenn der Zapfhahn an einer die Ableitung vertikal vom Stützboden nach oben führenden Säule schwenkbar angebracht ist. Der Zapfhahn hat dann eine gewisse Führung und kann zum Beispiel in einer ersten Position seine Auslaßöffnung so über die Kochkanne schwenken lassen, daß die Kochkanne auf dem Stützboden zu stehen kommt, während alternativ bei ausgeschwenktem Zapfhahn dessen Auslaßöffnung auch über eine Flasche oder dergleichen angeordnet werden kann.

Eine bevorzugte Ausführungsform der Erfindung ist weiter dadurch gekennzeichnet, daß ein von Hand und/oder durch die Schwenkbewegung des Zapfhahnes betätigbarer Schalter vorgesehen ist. Mit diesem Schalter kann zum Beispiel die Pumpe ein- bzw. ausgeschaltet werden. Eine Drucktaste ist hier eine bequeme Betätigungseinrichtung. Auch der Sicherheitsaspekt spielt bisweilen eine wichtige Rolle. Es kann unerwünscht sein, daß die Pumpe durch die Drucktaste eingeschaltet werden kann, wenn der Zapfhahn sich nicht über der Kochkanne befindet. Der von der Schwenkbewegung abhängige Schaltzustand erlaubt, diesem Bedürfnis gerecht zu werden. Andererseits kann man den Schalter auch so einrichten, daß bei einem Herausschwenken des Zapfhahnes um einen bestimmten Winkel, zum Beispiel 90° von der Grundstellung über der Kochkanne, die Pumpe mittels Drucktaste betätigt werden kann, um andere Gefäße zu befüllen. In anderen Winkelstellungen des Zapfhahnes bezüglich seiner Grundstellung ist dies durch eine Unterbrechung der Stromzufuhr nicht möglich. Hier sind diverse Anwendungsmöglichkeiten denkbar.

Vorteilhaft ist es auch, wenn erfindungsgemäß im Bereich der Kochkanne ein Sicherheitsschalter am Stützboden angeordnet ist. Dieser Sicherheitsschalter kann zum Beispiel die Verbindung zum Pumpenantrieb dann herstellen, wenn die Kochkanne an ihrem Platz auf dem Stützboden steht. Ein kleiner Zapfen im Bodenbereich der Kochkanne, der federnd vorgespannt ein Niederdrücken durch das Gewicht der Kochkanne erlaubt, gestattet bereits die Betätigung dieses Sicherheitsschalters. Bei abgenommener Kochkanne ist dann die Stromzufuhr zum Pumpenantrieb unterbrochen. Trotz Vorhandensein eines solchen Sicherheitsschalters kann man die Drucktaste für die Betätigung des Handschalters so einrichten, daß auch ohne Vorhandensein einer Kochkanne die Pumpe bei Tastendruck betätigt werden kann.

Eine Wasserfiltervorrichtung der erfindungsgemäßen Art braucht die bisherige Bauhöhe bekannter Wasserreinigungsvorrichtungen der Wasserkochern nicht zu überschreiten, obgleich alle der vorstehend erwähnten vorteilhaften Maßnahmen und Merkmale vorgesehen sind. Die geringe Bauhöhe der erfindungsgemäßen Vorrichtung begünstigt außer ihrer praktischen Handhabung die Aufstellung und damit auch die Benutzung der Vorrichtung.

Weitere Vorteile, Merkmale und Anwendungsmöglichkeiten der vorliegenden Erfindung ergeben sich aus der folgenden Beschreibung bevorzugter Ausführungsbeispiele in Verbindung mit den anliegenden Zeichnungen. Bei diesen zeigen:
- Figur 1: die gesamte Wasserfiltervorrichtung in zusammengesetztem Zustand auf dem gemeinsamen Stützboden,
- Figur 2: dieselbe Vorrichtung der Figur 1, bei welcher jedoch rechts vorn die Kochkanne entfernt ist,
- Figur 3: den abgenommenen Filtratbehälter, in dessen oberer Hälfte sich der Rohwasserbehälter befindet,
- Figur 4: den Stützboden mit Pumpengehäuse und Zapfhahn,
- Figur 5: die gleiche perspektivische Ansicht wie Figur 4, wobei jedoch die Pumpe mit ihren Zu- und Ableitungen gezeigt ist.
- Figur 6: die Kochkanne,
- Figur 7: die Rückansicht, wenn man in Figur 2 von links oben nach vorn unten blickt und
- Figur 8: eine ähnliche Ansicht wie Figur 7, bei welcher jedoch der Zapfhahn um 90° herausgeschwenkt und eine Wasserflasche als Aufnahmebehälter dargestellt ist.

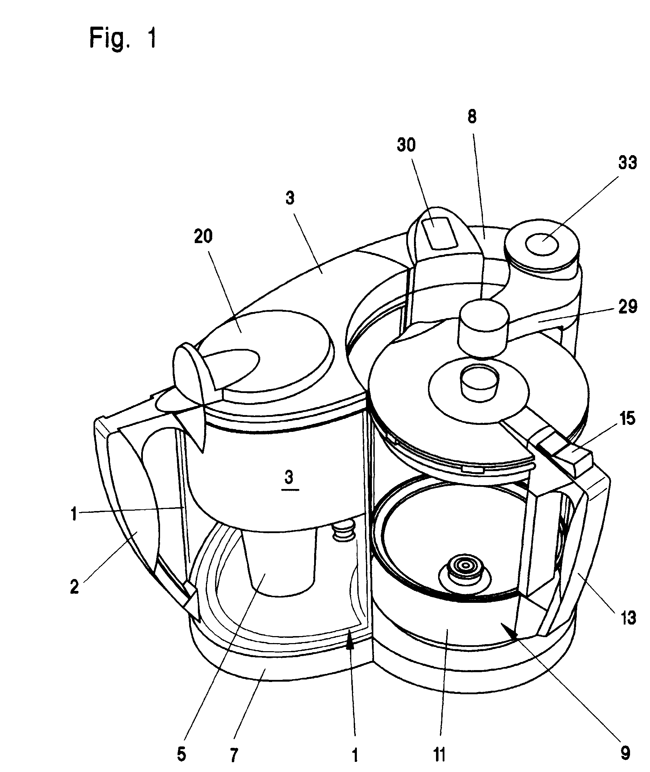

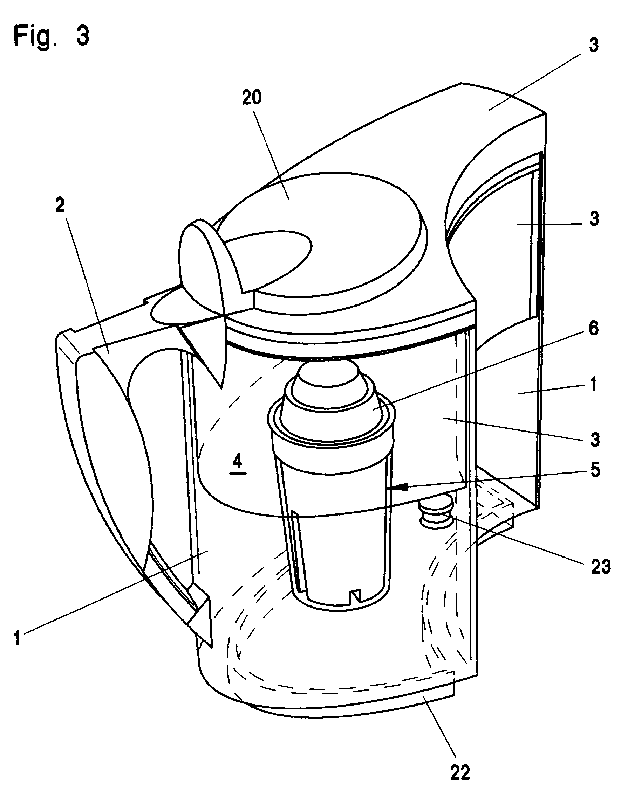

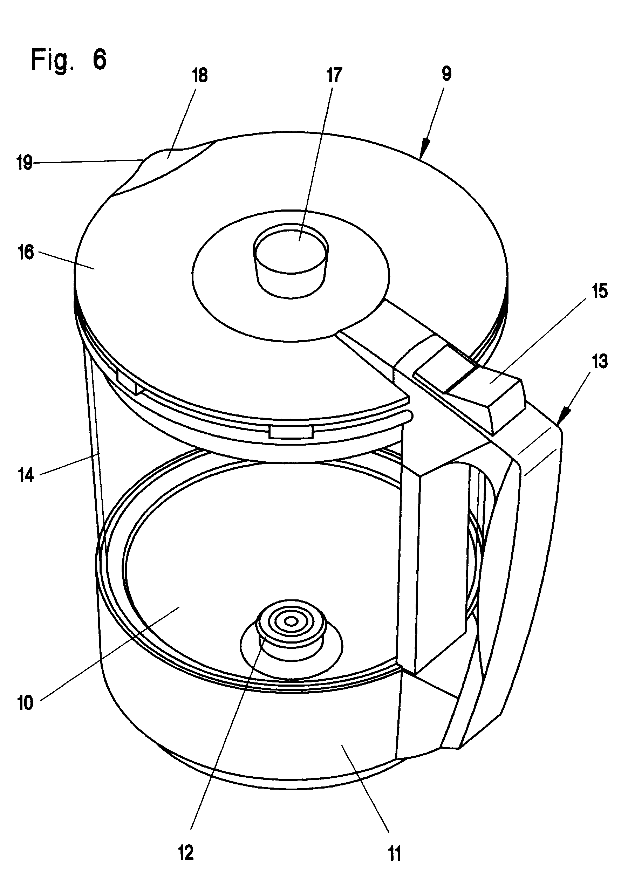

Die in ihrer Gesamtheit in Figur 1 perspektivisch dargestellte Wasserfiltervorrichtung hat einen Filtratbehälter 1 mit seitlich angebrachtem Griff 2, in dessen oberer Hälfte ein Rohwasserbehälter 3 eingepaßt ist. In dessen Boden 4 ist eine mit nicht gezeigtem Reinigungsmittel gefüllte Filterkartusche 5 dichtend eingesteckt. Die nicht näher gezeigten und in Figur 3 nur in Form einer Ringfläche angedeuteten Zulauföffnungen 6 der Filterkartusche 5 befinden sich oberhalb des Bodens 4 des Rohwasserbehälters 3 und erlauben den Eintritt von Rohwasser nach innen in die Filterkartusche 5. Nicht dargestellte Austrittsöffnungen befinden sich am unteren Ende der Filterkartusche 5 und gestatten den Austritt des gefilterten bzw. gereinigten Wassers in den Filtratbehälter 1. Das Aufnahmevolumen des Filtratbehälters ist etwa gleich groß dem Volumen des Rohwasserbehälters, und auch das Volumen der später noch zu beschreibenden Kochkanne (Figur 6) ist für die Aufnahme des gleichen Volumens vorgesehen, zum Beispiel 1,5 Liter.

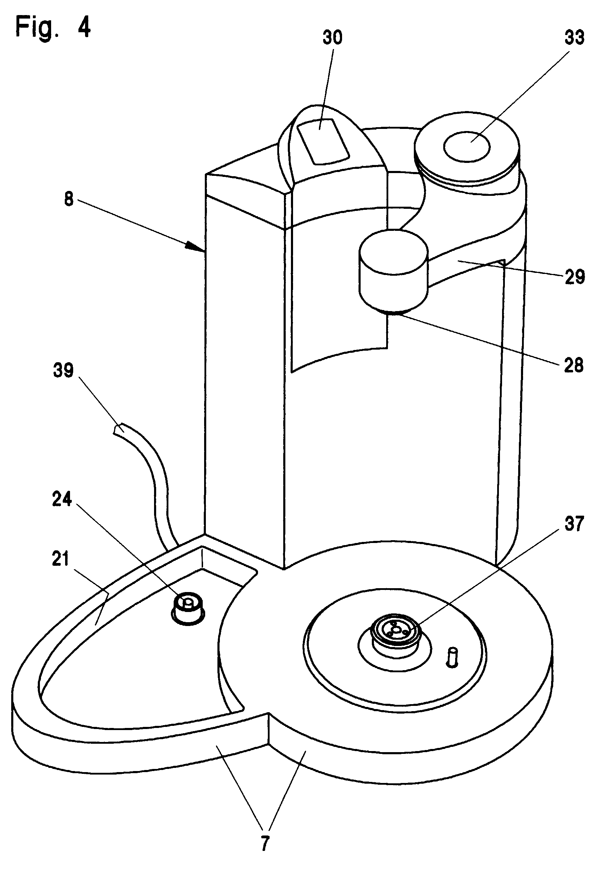

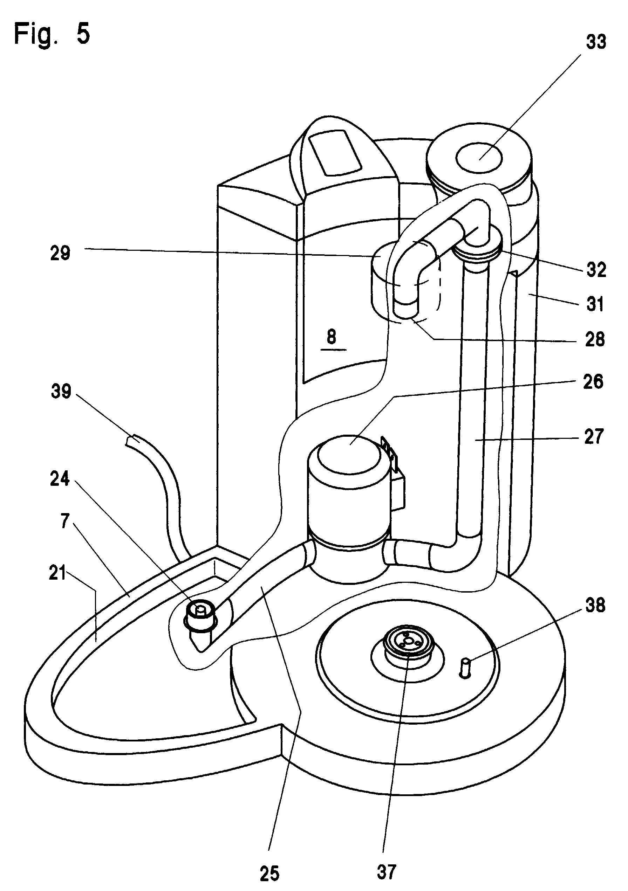

Auf dem gemeinsamen Stützboden 7, den man in den Figuren 4 und 5 gut erkennen kann, ist neben dem Pumpengehäuse 8 die Kochkanne 9 aufgesetzt. Diese ist als solche perspektivisch in Figur 6 herausgezeichnet.

Unter dem Heizboden 10 aus Edelstahl der Kochkanne 9 befindet sich der mit 11 bezeichnete Kannensockel, in dessen Mitte ein Elektrostecksockel 12 vorgesehen ist, um welchen herum in den Zeichnungen hier nicht näher dargestellte Heizeinrichtungen verlaufen. An der Seite weist die Kochkanne 9 einen Griff 13 neben dem Glaszylinder 14 und oben am Griff 13 einen Kochschalter 15 auf. Ein Deckel 16 verschließt den Glaszylinder 14 der Kochkanne 9 oben bis auf die Einlaßöffnung 17. Ein Klappdeckel 18 deckt die Ausgießschnaupe 19 ab und kann zum Ausgießen hochklappen.

Ähnlich wie die Kochkanne 9 ist auch der Filtratbehälter 1, dessen Oberkante auf gleicher Höhe wie die Oberkante des Rohwasserbehälters 3 liegt, durch einen Klappdeckel 20 verschlossen.

In die Aussparung 21 des Stützbodens 7 rastet der Kunststoffsteg 22 des Filtratbehälters 1 ein, so daß dieser am Stützboden 7 an den richtigen Platz gestellt wird. Durch das Aufsetzen des Filtratbehälters 1 auf den Stützboden 7 kommt es dann zu der korrekten Steckverbindung 23, die zusammen mit dem im Stützboden 7 befindlichen Feststecker 24 die Schnittstelle zu der in Figur 5 gezeigten Zuleitung 25 zur Pumpe 26 bildet.

Abstromseitig ist die Pumpe 26 über eine Ableitung 27 mit der Auslaßöffnung 28 eines Zapfhahnes 29 verbunden.

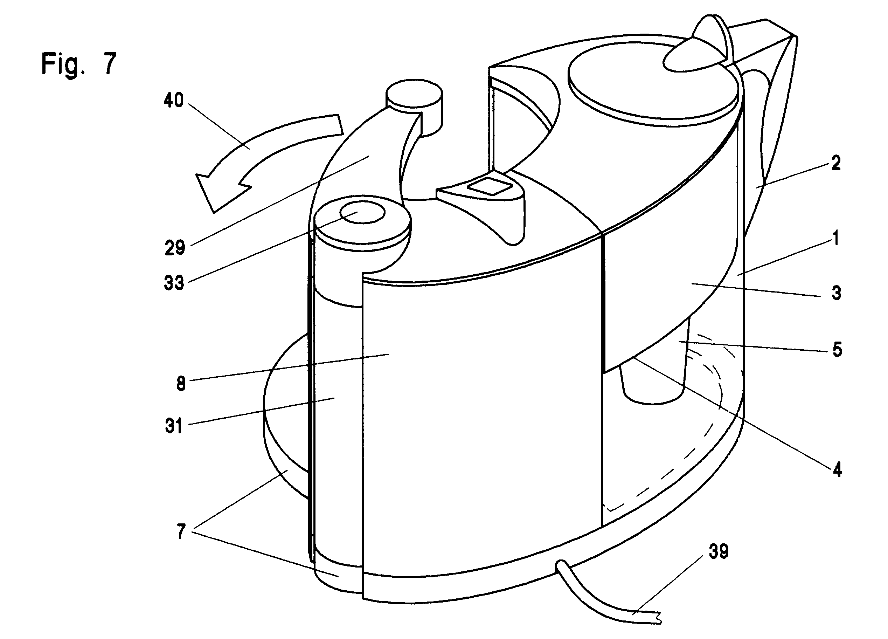

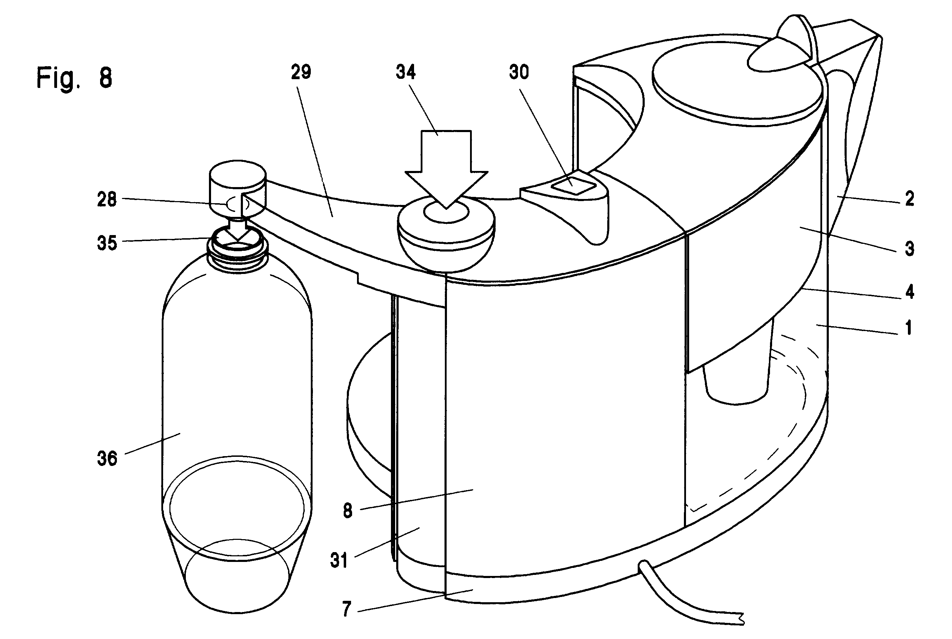

Der Zapfhahn 29 ist entsprechend Pfeil 40 gemäß Figur 7 aus der dort gezeigten Grundstellung, in welcher die Auslaßöffnung 28 über der Einlaßöffnung 17 der Kochkanne 9 angeordnet ist, um 90° in die in Figur 8 gezeigte Schwenkstellung des Zapfhahnes 29 schwenkbar.

In den Figuren mit dem Pumpgehäuse 8 ist die allgemein mit 30' bezeichnete Anzeigeeinrichtung für die Erschöpfung der Funktion des Reinigungsmittels zu sehen.

Auf der dem Filtratbehälter 1 mit Rohwasserbehälter 3 abgewandten Ende des Pumpengehäuses 8 ist eine Säule 31 gebildet, welche eine Führung für die vertikal vom Stützboden 7 nach oben sich erstreckende Ableitung 27 bildet. Am oberen Ende der Säule ist der Zapfhahn 29 um eine vertikale Achse (Mittelachse) schwenkbar angelenkt. Das Drehgelenk sieht man in Figur 5. Es ist mit 32 bezeichnet. Konzentrisch befindet sich oben in der Mine dieser Säule 31 der Tastschalter 33 für das Ein- und Ausschalten der Pumpe 26. Zur Betätigung drückt man in Richtung des Pfeiles 34, wie in Figur 8 gezeigt ist. In dieser befindet sich die Auslaßöffnung 28 des Zapfhahnes 29 über der Öffnung 35 einer Flasche 36, in welche aus dem Filtratbehälter 1 stammendes Wasser abgezapft und eingefüllt werden kann.

Neben dem Elektro-Stecksockel 37 am Stützboden 7 (für die Verbindung mit dem mittigen Stecksockel 12 der Kochkanne 9) ragt der vertikal bewegbare und federnd vorgespannte Stift eines Sicherheitsschalters 38 hervor.

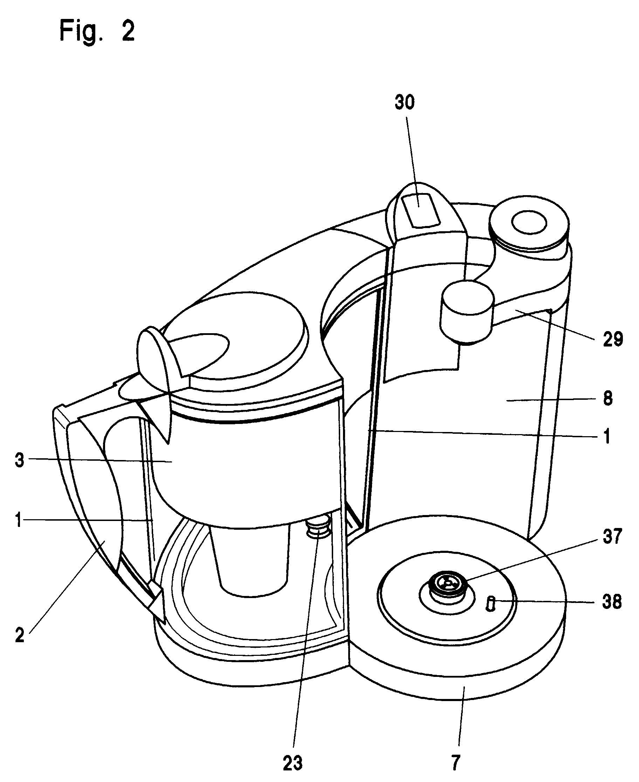

Für den Betrieb schwenkt man den Zapfhahn 29 in die Endposition über dem Stecksockel 37, wie in den Figuren 1, 2, 4, 5 und 7 gezeigt ist. Der nicht dargestellte Stecker am Kabel 39 wird angeschlossen. Der Filtratbehälter 1 mit eingesetztem Rohwasserbehälter 3 wird abgenommen und nach Hochklappen des Deckels 20 der Rohwasserbehälter mit zu reinigendem bzw. zu filtrierendem Wasser gefüllt. Es wird vorausgesetzt, daß die Filterkartusche 5 bereits eingesetzt ist. Sogleich beginnt der Durchlauf des Rohwassers durch die Filterkartusche 5, wobei sich der Filtratbehälter 1 allmählich füllt. Man setzt den Filtratbehälter dann wieder auf den Stützboden 7, so daß der Zustand der Figur 2 erreicht ist. Wenn filtriertes Wasser erwärmt werden soll, setzt man die Kochkanne 9 an die Position unter die Auslaßöffnung 28 des Zapfhahnes 29, so daß der Zustand der Figur 1 erreicht ist. Durch Betätigen des Tastschalters 33 durch Druck in Richtung des Pfeiles 34 pumpt die Pumpe 26 gereinigtes Wasser bzw. Filtrat über den Zapfhahn 29 in die Kochkanne 9.

Anstelle des Befüllens der Kochkanne 9 kann man aber auch den Zapfhahn 29 gemäß Darstellung der Figur 7 in Richtung des Pfeiles 40 um 90° um die Mittelachse der Säule 31 schwenken, so daß zum Beispiel die Flasche 36 unter die Auslaßöffnung 28 des Zapfhahnes 29 so in Position gebracht werden kann, daß nach Betätigung des Tastschalters 33 die Flasche 36 anstelle einer Kochkanne mit Filtrat gefüllt werden kann. Das Anzeigegerät 30 zeigt nach einiger Zeit an, daß das Reinigungsmittel erschöpft ist und die Filterkartusche durch eine neue ersetzt werden muß.

### Bezugszeichenliste

- 1: Filtratbehälter
- 2: Griff des Filtratbehälters
- 3: Rohwasserbehälter
- 4: Boden des Rohwasserbehälters
- 5: Filterkartusche
- 6: Zulauföffnung der Filterkartusche
- 7: Stützboden
- 8: Pumpengehäuse
- 9: Kochkanne
- 10: Heizboden
- 11: Kannensockel
- 12: Elektrostecksockel
- 13: Griff der Kochkanne
- 14: Glaszylinder
- 15: Kochschalter
- 16: Deckel des Glaszylinders
- 17: Einlaßöffnung
- 18: Klappdeckel
- 19: Ausgießschnaupe
- 20: Klappdeckel des Filtratbehälters
- 21: Aussparung
- 22: Kunststoffsteg
- 23: Steckverbindung
- 24: Feststecker
- 25: Pumpenzuleitung
- 26: Pumpe
- 27: Ableitung der Pumpe
- 28: Auslaßöffnung des Zapfhahnes
- 29: Zapfhahn
- 30: Erschöpfungsanzeige
- 31: Säule
- 32: Drehgelenk
- 33: Tastschalter
- 34: Pfeil - Betätigungsrichtung des Tastschalters
- 35: Flaschenöffnung
- 36: Flasche
- 37: Elektro-Stützsockel
- 38: Sicherheitsschalter
- 39: Kabel
- 40: Schwenkrichtung des Zapfhahnes

## Patentansprüche

1. Wasserfiltervorrichtung mit einem Filtratbehälter (1) mit seitlich angebrachtem Griff (2), mit einem Rohwasserbehälter (3) und mit einem Reinigungsmittel aufweisenden Filter (5), der mit dem Filtratbehälter (1) und dem Rohwasserbehälter (3) in Fließverbindung steht, wobei Heizeinrichtungen (Heizboden 10, Kannensockel 11) für die Erwärmung und eine Pumpe (26) für die Fließbewegung des filtrierten Wassers vorgesehen sind, **dadurch gekennzeichnet, daß** der Filter (5) als Filterkartusche (5) ausgestaltet ist, deren mindestens eine Zulauföffnung (6) im Bodenbereich des Rohwasserbehälters (3) angeordnet ist und die so nach unten in den Filtratbehälter (1) ragt, daß das Rohwasser durch Schwerkraft bis mindestens unter die Filterkartusche (5) gelangen kann, daß die Pumpe (26) über eine Zuleitung (25) mit dem Filtratbehälter (1) und über eine Ableitung (27) mit der Auslaßöffnung (28) eines Zapfhahnes (29) verbindbar ist und daß eine Kochkanne (9) unter dem Zapfhahn (29) anbringbar vorgesehen ist und die Heizeinrichtungen (Heizboden 10, Kannensockel 11) aufweist.

2. Vorrichtung nach Anspruch 1, dadurch gekennzeichnet, daß die Behälter (1, 3, 5), die Pumpe (26) und die Kochkanne (9) von einem gemeinsamen Stützboden (7) gehalten sind.

3. Vorrichtung nach Anspruch 1 oder 2, dadurch gekennzeichnet, daß der Rohwasserbehälter (3) und/oder der Filtratbehälter (1) abnehmbar ist/sind.

4. Vorrichtung nach einem der Ansprüche 1 bis 3, dadurch gekennzeichnet, daß die Kochkanne (9) abnehmbar ausgestaltet ist.

5. Vorrichtung nach einem der Ansprüche 1 bis 4, dadurch gekennzeichnet, daß an der Pumpe (26) eine Einrichtung (30) zur Anzeige der Erschöpfung des Reinigungsmittels in der Filterkartusche (5) vorgesehen ist.

6. Vorrichtung nach einem der Ansprüche 1 bis 5, dadurch gekennzeichnet, daß der Zapfhahn (29) gegenüber dem Stützboden (7) bewegbar vorgesehen ist.

7. Vorrichtung nach einem der Ansprüche 1 bis 6, dadurch gekennzeichnet, daß der Zapfhahn (29) an einer die Ableitung (27) vertikal vom Stützboden (7) nach oben führenden Säule (31) schwenkbar angebracht ist.

8. Vorrichtung nach einem der Ansprüche 1 bis 7, dadurch gekennzeichnet, daß ein von Hand und/oder durch die Schwenkbewegung des Zapfhahnes (29) betätigbarer Schalter (33) vorgesehen ist.

9. Vorrichtung nach einem der Ansprüche 1 bis 8, dadurch gekennzeichnet, daß im Bereich der Kochkanne (9) ein Sicherheitsschalter (38) am Stützboden (7) angeordnet ist.

10. Verwendung einer Wasserfiltervorrichtung nach einem der Ansprüche 1 bis 9 für das Befüllen von Gefäßen mit filtriertem, nicht erwärmtem Wasser.
